# EUROPEAN PATENT SPECIFICATION

(11) **EP 4 245 649 B1**
(45) Date of publication and mention of the grant of the patent: **01.05.2024**
(21) Application number: 23161613.7
(22) Date of filing: 13.03.2023
(51) Int. Cl.: B62D 25/04, B62D 25/06, B62D 27/02

(54) **REAR ROOF CROSS BEAM MOUNTING STRUCTURE FOR VEHICLE, AND VEHICLE**
HECKDACHQUERTRÄGERMONTAGESTRUKTUR FÜR EIN FAHRZEUG UND FAHRZEUG
STRUCTURE DE MONTAGE DE TRAVERSE DE TOIT ARRIÈRE POUR VÉHICULE ET VÉHICULE

(30) Priority: 15.03.2022 CN 202210249975
(43) Date of publication of application: 20.09.2023
(73) Proprietor: Nio Technology (Anhui) Co., Ltd, Hefei City, Anhui 230601 (CN)
(72) Inventor: ZHANG, Cheng, Jiading Shanghai (CN)
(74) Representative: Vossius & Partner Patentanwälte Rechtsanwälte mbB

(56) References cited:
- CN-U- 207 758 876
- DE-A1-102009 042 985

## Description

### Technical Field

The disclosure relates to the technical field of vehicles, and in particular to a rear roof cross beam mounting structure for a vehicle, and a vehicle.

### Background

In recent years, how to achieve light weight has become the focus of automobile research and development, more and more lightweight machining materials and process designs have been applied to automobiles. Due to the fact that an aluminum alloy has many advantages such as low density, high strength, good corrosion resistance and ease of machining, the aluminum alloy is increasingly widely applied to vehicles.

A technical solution using an aluminum alloy as a roof cross beam of an automobile has been developed in the prior art. For example, the Chinese utility model patent CN 207758876 U discloses a vehicle body assembly and a vehicle. The vehicle body assembly comprises a roof cross beam assembly and a body side assembly, wherein the roof cross beam assembly is a structural component of aluminum alloy, the body side assembly is a structural component of steel, the roof cross beam assembly and the body side assembly are riveted by an SPR riveting process, and the roof cross beam assembly and the body side assembly are in lap joint by means of pre-lap hasps. The SPR riveting process used can effectively solve the problem of a connection process for a roof cross beam assembly made of an aluminum alloy and a body side assembly made of a steel material. In addition, by means of pre-lap fastening, it is possible to solve the space problem that a general assembly station has no front and rear roof cross beam fixing devices. However, when a pre-lap hasp in the vehicle body assembly is fitted, the pre-lap hasp needs to be first inserted into a circumferentially closed hole and then undergo a bending operation, the operation is not only difficult, and the bending operation is also likely to cause damage to the pre-lap hasp and inefficient assembly.

Therefore, a new technical solution is needed in the art to solve the above problem.

### Summary

In order to solve the technical problem of low assembly efficiency of a pre-positioning structure of a roof cross beam in the prior art, the disclosure provides a roof rear cross beam mounting structure for a vehicle. The rear roof cross beam mounting structure comprises: a left D pillar and a right D pillar, the left D pillar and the right D pillar each being fixed to a body of the vehicle; a lower cross beam, the lower cross beam being arranged between the left D pillar and the right D pillar; a pre-positioning structure, the pre-positioning structure comprising pre-positioning posts and pre-positioning holes, wherein the pre-positioning posts are columnar protrusions respectively extending upwardly from bodies of the left D pillar and the right D pillar along a center line offset from a Z-direction of the vehicle by a predetermined acute angle, the pre-positioning holes are U-shaped grooves respectively formed in a left side edge and a right side edge of the lower cross beam and having openings facing away from a body of the lower cross beam, and the columnar protrusions are configured to be insertable into corresponding U-shaped grooves such that the lower cross beam can be placed on each of the left D pillar and the right D pillar along the center line.

In the rear roof cross beam mounting structure for a vehicle of the disclosure, the left D pillar, the right D pillar, the lower cross beam, and the pre-positioning structure are included. The left D pillar and the right D pillar each are fixed to a body of the vehicle so as to support the lower cross beam. The lower cross beam is arranged between the left D pillar and the right D pillar. The pre-positioning structure comprises the pre-positioning posts and the pre-positioning holes, wherein the pre-positioning posts are configured as the columnar protrusions respectively extend upwardly from the bodies of the left D pillar and the right D pillar along the center line offset from a Z-direction of the vehicle by a predetermined acute angle, the pre-positioning holes are formed in a left side edge and a right side edge of the lower cross beam and are configured as the U-shaped grooves with openings facing away from a body of the lower cross beam, and the columnar protrusions are insertable into corresponding U-shaped grooves such that the lower cross beam is placed on each of the left D-pillar and the right D-pillar along the center line. With the above-described configuration, the lower cross beam can be easily constrained between the left D pillar and the right D pillar to form pre-positioned fit, facilitating subsequent assembly and fixation, so that the assembly takt is optimized and the assembly efficiency is increased. Further, by means of the efficient fit between the columnar protrusions and the open U-shaped grooves, the problems such as inconvenience of operation and damages to components caused by the bending operation performed on the pre-lap hasps can be avoided. Further, the columnar bodies are configured to extend along the center line at the predetermined acute angle from the Z-direction of the vehicle, so that the lower cross beam can be lowered or dropped onto the left D pillar and the right D pillar along the center line of the columnar protrusions offset from the Z-direction of the vehicle, and form a stable pre-lap joint relationship therewith. Since the center line of the columnar protrusions deviates from the Z-direction of the vehicle, this pre-lap joint relationship ensures that the lower cross beam will not be released from the left D pillar and the right D pillar during the process of translating the entire assembly to a subsequent fixing station, thereby significantly increasing the assembly efficiency. Still further, the pre-positioning holes are configured as the U-shaped grooves with the openings facing the left D pillar and the right D pillar respectively, so that the columnar protrusions very easily enter the corresponding U-shaped grooves, the lower cross beam is then easily or conveniently lowered onto the left D pillar and the right D pillar, and such U-shaped grooves are also easy to machine.

In the above-described preferred technical solution of the rear roof cross beam mounting structure for a vehicle, the left D pillar, the right D pillar, and the lower cross beam each are aluminum alloy castings. The left D pillar, the right D pillar, and the lower cross beam each are machined from an aluminum alloy material, so that the weight of components can be reduced, a lightweight level can be provided, and the material cost can be reduced. In addition, the above-described components each are configured as castings formed by a casting process, which may also enhance the stress conduction capacity and ensure the rigidity and strength of the entire rear roof cross beam mounting structure. More importantly, by using the casting process to machine the above-described components, the obliquely arranged columnar protrusions and U-shaped grooves can be more convenient to machine, and the difficulty of machining can be reduced.

In the above-described preferred technical solution of the rear roof cross beam mounting structure for a vehicle, a predetermined gap is reserved between the columnar protrusions and corresponding U-shaped grooves. The predetermined gap provides a safety guarantee for placing the lower cross beam on the left D pillar and the right D pillar, avoiding interference with the lower cross beam when the pillar protrusions are inserted into the corresponding U-shaped grooves, thereby further increasing the assembly efficiency.

In the above-described preferred technical solution of the rear roof cross beam mounting structure for a vehicle, the predetermined acute angle ranges from 5° to 25°. With the above-described configuration, the columnar protrusions are allowed to have a moderate inclination angle, preventing a too small angle from increasing the difficulty of demoulding, and preventing a too large angle from causing failure to match with corresponding U-shaped grooves.

In the above-described preferred technical solution of the rear roof cross beam mounting structure for a vehicle, a boss extending perpendicularly upwardly from the body of the lower cross beam is formed at an edge of the U-shaped groove. The provision of the boss allows to further prevent the lower cross beam from being released from the left D pillar and the right D pillar during translation. Further, with the above-described configuration, it is also possible to enhance the rigidity and strength at the positions on the lower cross beam close to the U-shaped grooves, and to prevent shortening of the service life of the product due to deformation of the U-shaped grooves.

In the above-described preferred technical solution of the rear roof cross beam mounting structure for a vehicle, the body of the lower cross beam has a thickness of 2.5 mm-3.5 mm□. With the above-described configuration, it is possible to facilitate machining and molding the material of the castings and also possible to enable the castings to have good mechanical properties.

In the above-described preferred technical solution of the rear roof cross beam mounting structure for a vehicle, the rear roof cross beam mounting structure further comprises: an upper cross beam, the upper cross beam being fixedly connected to each of the left D pillar, the lower cross beam and the right D pillar, and the upper cross beam, the left D pillar, the lower cross beam and the right D pillar jointly enclosing a reinforcement cavity. The rigidity and strength of the rear roof cross beam mounting structure can be further increased by providing the upper cross beam that is fixedly connected to the left D pillar, the lower cross beam and the right D pillar. In addition, the provision of the reinforcement cavity enables increased torsional rigidity of the entire rear roof cross beam mounting structure, and prevents the vibration of the components from affecting NVH properties.

In the above-described preferred technical solution of the rear roof cross beam mounting structure for a vehicle, the upper cross beam is an aluminum alloy stamped part. The upper cross beam is machined from an aluminum alloy material, which may reduce the weight and material cost of the components. In addition, the upper cross beam is machined by a stamping process, and it is also possible to simplify the machining process and to reduce the manufacturing cost on the premise that the entire rear roof cross beam mounting structure meets rigidity and strength requirements.

In the above-described preferred technical solution of the rear roof cross beam mounting structure for a vehicle, a reinforcing rib located in the reinforcing cavity is provided on each of the left D pillar, the lower cross beam, and the right D pillar. By providing the reinforcing rib located in the reinforcing cavity on each of the left D pillar, the lower cross beam and the right D pillar, not only the rigidity and strength of each component can be enhanced, the entire rear roof cross beam mounting structure can also have good mechanical properties, and it is ensured that less torsion occurs in the region of the reinforcement cavity under the action of a moment and the amplitude of deformation is within a controllable range, abnormal noise can be prevented, and the NVH properties can thus be improved.

In the above-described preferred technical solution of the rear roof cross beam mounting structure for a vehicle, a plurality of transverse reinforcing ribs and a plurality of longitudinal reinforcing ribs spaced apart from each other are formed on the body of the lower cross beam, and a cylindrical protrusion is formed at each of junctions between the transverse reinforcing ribs and the longitudinal reinforcing ribs. With the above-described arrangement, the rigidity and strength of the lower cross beam can be further enhanced, so that the lower cross beam has a regular structure and is convenient to machine.

In the above-described preferred technical solution of the rear roof cross beam mounting structure for the vehicle, the fixed connection is formed between the lower cross beam and the left D pillar and the right D pillar in the manner of combining self-piercing riveting with a structural adhesive, or in the manner of combining welding with a structural adhesive. With the above-described configuration, it is possible to create a firm connection at the lap joints between the lower cross beam and the left D pillar and the right D pillar, and to prevent an excessive local stress from affecting the stability of the entire rear roof cross beam mounting structure.

In order to solve the technical problem of low assembly efficiency of the pre-positioning structure of the roof cross beam in the prior art, the disclosure further provides a vehicle. The vehicle includes the rear roof cross beam mounting structure for a vehicle described in any one of the above technical solutions. With the rear roof cross beam mounting structure for a vehicle described in any one of the above technical solutions, the vehicle of the disclosure can efficiently achieve pre-positioning fit, optimize the assembly takt, and increase the assembly efficiency.

### Brief Description of the Drawings

Preferred implementations of the disclosure are described below with reference to the drawings in which:
FIG. 1 is a schematic structural diagram of an embodiment of a rear roof cross beam mounting structure for a vehicle that is assembled to a vehicle body according to the disclosure;
FIG. 2 is a schematic exploded diagram of an embodiment of the rear roof cross beam mounting structure for a vehicle and the vehicle body according to the disclosure;
FIG. 3 is a schematic structural diagram of an embodiment of a lower cross beam of the rear roof cross beam mounting structure for a vehicle according to the disclosure;
FIG. 4 is a schematic structural diagram of an embodiment of an upper cross beam of the rear roof cross beam mounting structure for a vehicle according to the disclosure;
FIG. 5 is a schematic structural diagram of an embodiment of the rear roof cross beam mounting structure for a vehicle according to the disclosure, with the upper cross beam assembled to the lower cross beam;
FIG. 6 is a cross-sectional view taken along line A-A shown in FIG. 5;
FIG. 7 is a schematic structural diagram of an embodiment of a pre-positioning structure of the rear roof cross beam mounting structure for a vehicle according to the disclosure;
FIG. 8 is a schematic structural diagram of an embodiment of a pre-positioning post of the rear roof cross beam mounting structure for a vehicle according to the disclosure;
FIG. 9 is a schematic structural diagram of an embodiment of a pre-positioning groove of the rear roof cross beam mounting structure for a vehicle according to the disclosure; and
FIG. 10 is a cross-sectional view taken along line B-B shown in FIG. 1.

List of reference signs:
1. Rear roof cross beam mounting structure; 10. Left D pillar; 11. Left D pillar body; 12. First reinforcing rib; 13. Left lap joint region; 14. Left pre-positioning post; 20. Right D pillar; 21. Right D pillar body; 22. Second reinforcing rib; 23. Right lap joint region; 24. Right pre-positioning post; 30. Lower cross beam; 31. Lower cross beam body; 32. Transverse reinforcing rib; 33. Longitudinal reinforcing rib; 34. Cylindrical protrusion; 35. Left lap joint edge; 351. Left pre-positioning hole; 36. Right lap joint edge; 361. Right pre-positioning hole; 37. Boss; 40. Upper cross beam; 41. Upper cross beam body; 50. Reinforcement cavity; 60. Pre-positioning structure; 61. Pre-positioning post; 611. Columnar protrusion; 62. Pre-positioning hole; 621. U-shaped groove; 6211. Guide edge; 2. Vehicle body; 210. Left sheet metal; 211. Left drip channel; 220. Right sheet metal; 221. Right drip channel.

### Detailed Description of Embodiments

Preferred embodiments of the disclosure are described below with reference to the accompanying drawings. Those skilled in the art should understand that these implementations are only used to explain the technical principles of the disclosure, and are not intended to limit the scope of protection of the disclosure.

It should be noted that, in the description of the disclosure, the terms that indicate the direction or positional relationship, such as "upper", "lower", "left", "right", "inner", and "outer", are based on the direction or positional relationship shown in the figures, which is merely for ease of description instead of indicating or implying that the apparatus or element must have a particular orientation and be constructed and operated in a particular orientation, and therefore, should not be construed as limiting the disclosure. Furthermore, the terms "first" and "second" are used for descriptive purposes only, and cannot be understood as indicating or implying relative importance.

In addition, it should also be noted that, in the description of the disclosure, the terms "mount", "provide" and "connect" should be interpreted in a broad sense unless explicitly defined and limited otherwise, which, for example, may mean a fixed connection, a detachable connection or an integral connection; and may be a direct connection, an indirect connection by means of an intermediary, or internal communication between two elements. For those skilled in the art, the specific meaning of the above-mentioned terms in the disclosure can be interpreted according to the specific situation.

In order to solve the technical problem that a rear roof cross beam in the prior art cannot meet the rigidity requirement of the entire vehicle, the disclosure provides a rear roof cross beam mounting structure 1 for a vehicle. The rear roof cross beam mounting structure 1 comprises: a left D pillar 10 and a right D pillar 20, each of the left D pillar 10 and the right D pillar 20 being fixed to a vehicle body 2 of the vehicle; a lower cross beam 30, the lower cross beam 30 being arranged between the left D pillar 10 and the right D pillar 20; and a pre-positioning structure 60, the pre-positioning structure 60 comprising pre-positioning posts 61 and pre-positioning holes 62, wherein the pre-positioning posts 61 are the columnar protrusions 611 respectively extend upwardly from bodies of the left D pillar 10 and the right D pillar 20 along a center line L1 offset from a Z direction of the vehicle by a predetermined acute angle, the pre-positioning holes 62 are U-shaped grooves 621 respectively formed in a left side edge and a right side edge of the lower cross beam 30 and have openings facing away from a lower cross beam body 31, and the columnar protrusions 611 are configured to be insertable into corresponding U-shaped grooves 621 such that the lower cross beam 30 can be placed on each of the left D pillar 10 and the right D pillar 20 along the center line L1.

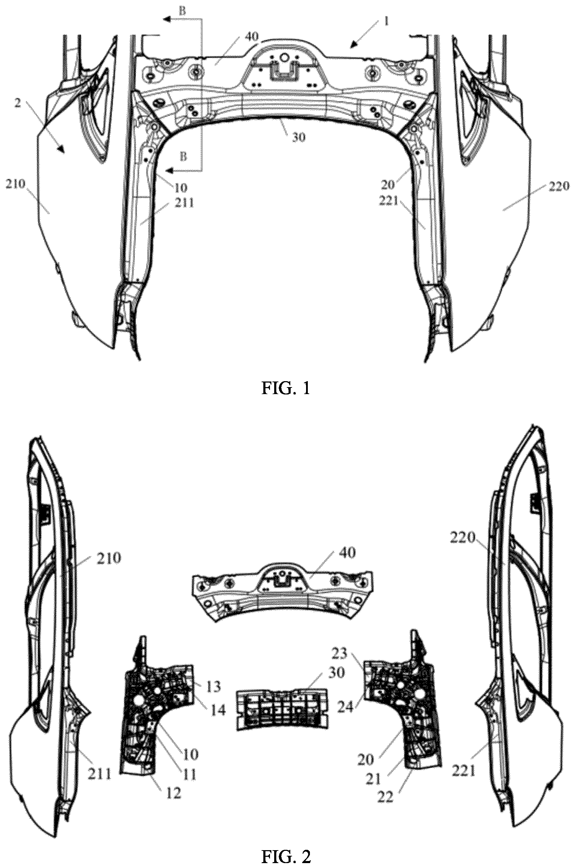

FIG. 1 is a schematic structural diagram of an embodiment of a rear roof cross beam mounting structure for a vehicle that is assembled to a vehicle body according to the disclosure; FIG. 2 is a schematic exploded diagram of an embodiment of the rear roof cross beam mounting structure for a vehicle and the vehicle body according to the disclosure. As shown in FIGS. 1 and 2, in one or more embodiments, the rear roof cross beam mounting structure 1 for a vehicle of the disclosure comprises the left D pillar 10, the right D pillar 20, the lower cross beam 30 located between the left D pillar 10 and the right D pillar 20, and etc.

With continued reference to FIGS. 1 and 2, the left D pillar 10 is configured to be fixable to a left sheet metal 210 of the vehicle body 2. Specifically, the left D pillar 10 is fixed to an upper portion of the left sheet metal 210 substantially in an X direction of the vehicle (i.e., a front-rear direction of the vehicle). Fixing means include, but are not limited to, resistance spot welding (RSW), self-piercing riveting (SPR), etc. In one or more embodiments, a left drip channel 211 fixed above and covering the left D pillar 10 is further provided at the upper portion of the left sheet metal 210 so as to further increase the connection reliability between the left D pillar 10 and the vehicle body 2.

As shown in FIG. 2, in one or more embodiments, the left D pillar 10 has a substantially plate-like left D pillar body 11. The left D pillar body 11 is a metal casting machined by means of a high-pressure die-casting process, allowing it to have a good rigidity and strength. Preferably, the left D pillar body 11 is an aluminum alloy casting, allowing it to have a light weight, good mechanical strength and low material cost. Alternatively, the left D pillar body 11 may also be machined from other suitable metal materials, such as a magnesium alloy. In one or more embodiments, a plurality of first reinforcing ribs 12 are provided on the left D pillar body 11 to enhance the rigidity and strength of the left D pillar 10. As compared to stamped parts, various styles of first reinforcing ribs 12 may be easily machined by manufacturing the left D pillar 10 by the high-pressure die-casting process. Preferably, the positions of the first reinforcing ribs 12 may be optimized by means of topological design to make the ribs more rational.

With continued reference to FIGS. 1 and 2, the right D pillar 20 is configured to be fixable to a right sheet metal 220 of the vehicle body 2. Specifically, the right D pillar 20 is fixed to an upper portion of the right sheet metal 220 substantially in the X-direction of the vehicle. Fixing means include, but are not limited to, resistance spot welding (RSW), self-piercing riveting (SPR), etc. In one or more embodiments, a right drip channel 221 fixed above and covering the right D pillar 20 is further provided at the upper portion of the right sheet metal 220 to further increase the connection reliability between the right D pillar 20 and the vehicle body 2.

As shown in FIG. 2, in one or more embodiments, the right D pillar 20 has a substantially plate-like right D pillar body 21. Preferably, the right D pillar body 21 has a structure that is bilaterally symmetrical with the left D pillar body 11 with respect to the central axis of the vehicle body 2, so that the structure can be simplified, machining can be facilitated, and it is ensured that the two bodies are subject to a balanced external force. The right D pillar body 21 is a metal casting machined by the high-pressure die-casting process, allowing it to have a good rigidity and strength. Preferably, the right D pillar body 21 is an aluminum alloy casting, allowing it to have a light weight, good mechanical strength and low material cost. Alternatively, the right D pillar body 21 may also be machined from other suitable metal materials, such as an magnesium alloy. In one or more embodiments, a plurality of second reinforcing ribs 22 are provided on the right D pillar body 21 to enhance the rigidity and strength of the right D pillar 20. As compared to stamped parts, various styles of second reinforcing ribs 22 may be easily machined by manufacturing the right D pillar 20 by the high-pressure die-casting process. Preferably, the positions of the second reinforcing ribs 22 may be optimized by means of topological design to make the ribs more rational.

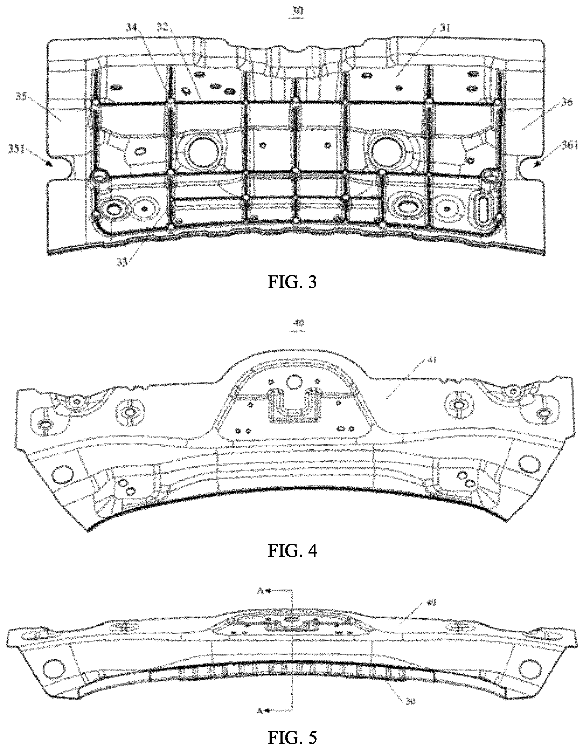

FIG. 3 is a schematic structural diagram of an embodiment of the lower cross beam of the rear roof cross beam mounting structure for a vehicle according to the disclosure. As shown in FIG. 3, in one or more embodiments, the lower cross beam 30 has a substantially plate-like lower cross beam body 31. Preferably, the lower cross beam body 31 is configured to be bilaterally symmetrical with respect to the central axis to facilitate machining. The lower cross beam body 31 is a metal casting machined by the high-pressure die-casting process, allowing it to have a good rigidity and strength. Preferably, the lower cross beam body 31 is an aluminum alloy casting, allowing it to have a light weight, good mechanical strength and low material cost. Alternatively, the lower cross beam body 31 may also be machined from other suitable metal materials, such as an magnesium alloy. In one or more embodiments, the lower cross beam body 31 has a thickness in a range of 2.5 mm-3.5 mm, which facilitates cast molding and allows the lower cross beam body to have good mechanical properties. On the basis of the orientation shown in FIG. 5, in one or more embodiments, a plurality of transverse reinforcing ribs 32 extending in a left-right direction and a plurality of longitudinal reinforcing ribs 33 extending in an up-down direction are provided on the lower cross beam body 31, and the transverse reinforcing ribs 32 and the longitudinal reinforcing ribs 33 are arranged alternately with each other. With the above-described configuration, the rigidity and strength of the lower cross beam body 31 can be enhanced, allowing the lower cross beam body to have good mechanical properties. By machining the lower cross beam body 31 by the high-pressure die-casting process, it is easy and quick for the reinforcing ribs to be manufactured. It should be noted that the numbers and heights of the transverse reinforcing ribs 32 and the longitudinal reinforcing ribs 33 can be optimized according to the topological design, so as to allow the ribs to have optimal mechanical properties in a limited space. In one or more embodiments, a cylindrical protrusion 34 extending perpendicularly outwardly from the lower cross beam body 31 is provided at each of junctions between the transverse reinforcing ribs 32 and the longitudinal reinforcing ribs 33, so as to further enhance the strength at the junctions between the reinforcing ribs and to prevent the reinforcing ribs from deforming due to an excessive length.

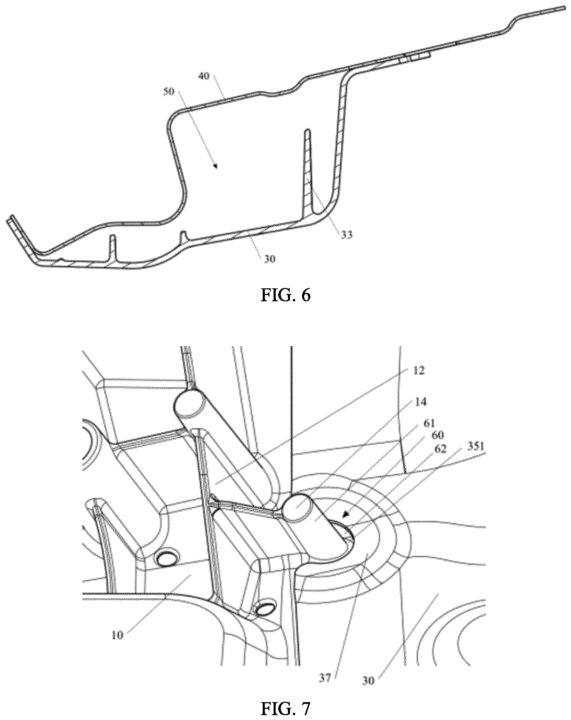

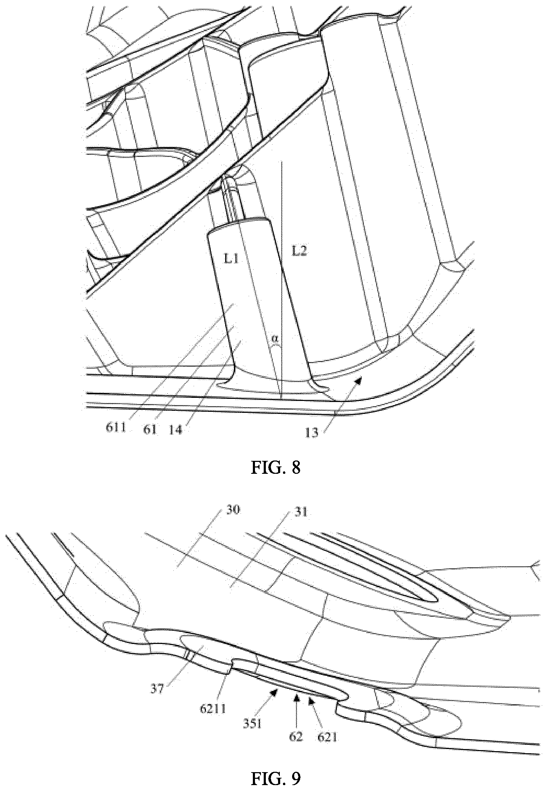

FIG. 7 is a schematic structural diagram of an embodiment of a pre-positioning structure of the rear roof cross beam mounting structure for a vehicle according to the disclosure; FIG. 8 is a schematic structural diagram of an embodiment of a pre-positioning post of the rear roof cross beam mounting structure for a vehicle according to the disclosure; FIG. 9 is a schematic structural diagram of an embodiment of a pre-positioning groove of the rear roof cross beam mounting structure for a vehicle according to the disclosure.

The pre-positioning structure 60 in the rear roof cross beam mounting structure 1 for a vehicle according to the disclosure will be described in detail below with reference to FIGS. 7-9.

As shown in FIG. 7, the pre-positioning structure 60 comprises the pre-positioning posts 61 and the pre-positioning holes 62 matched with each other. The pre-positioning posts 61 include a left pre-positioning post 14 formed on the left D pillar 10 and a right pre-positioning post 24 formed on the right D pillar 20. The pre-positioning holes 62 includes a left pre-positioning hole 351 formed in the left side of the lower cross beam 30 and a right pre-positioning hole 361 formed in the right side of the lower cross beam. The left pre-positioning post 14 is matched with the left pre-positioning hole 351 and the right pre-positioning post 24 is matched with the right pre-positioning hole 361 such that the lower cross beam 30 can be in lap joint between the left D pillar 10 and the right D pillar 20. By means of the matching between the pre-positioning posts 61 and the pre-positioning holes 62, the lower cross beam 30 can be easily pre-positioned and be in lap joint between the left D pillar 10 and the right D pillar 20 when actually assembled. Further, after the lower cross beam 30, the left D pillar 10 and the right D pillar 20 are in lap joint together, since the pre-positioning posts 61 are limited between corresponding pre-positioning holes 62, the lower cross beam 30 will not be released from the left D pillar 10 and the right D pillar 20 when the above-described components are translated from a positioning station to a fixing station (namely, the lower cross beam 30 will not shake off from the left D pillar 10 and/or the right D pillar 20 during the movement), and accordingly the assembly efficiency is significantly increased. In one or more embodiments, a fixed connection is formed at the lap joints between the lower cross beam 30 and the left D pillar 10 and the right D pillar 20 by means of combining welding with a structural adhesive, so as to form firm a fixed connection at the lap joints. Alternatively, the lap joints between the lower cross beam 30 and the left D pillar 10 and the right D pillar 20 may also be fixed by combining self-piercing riveting with a structural adhesive or by other suitable means.

With continued reference to FIG. 2 and on the basis of the orientation shown in FIG. 2, a left lap joint region 13 is formed on the right side of the left D pillar body 11 and extends substantially in the up-down direction (i.e., the X-direction of the vehicle in an assembled state). A left pre-positioning post 14 is formed in the left lap joint region 13. As shown in FIG. 8, the left pre-positioning post 14 is a columnar protrusion 611 extending from the left lap joint region 13 along a center line (i.e., a direction indicated by L1 in FIG. 8) offset from the Z direction of the vehicle (i.e., a direction indicated by L2 in FIG. 8) by the predetermined acute angle α. The left pre-positioning post 14 extends obliquely toward the upper left based on the direction shown in FIG. 3. The obliquely arranged columnar protrusions 611 are also easy to demold during casting machining. The predetermined acute angle is within a range of 5°-25° such that the columnar protrusions 611 have a moderate angle of inclination, preventing a too small angle from increasing the difficulty of demoulding, and preventing a too large angle from causing failure to match with corresponding pre-positioning holes 62. Preferably, the left pre-positioning post 14 is configured to be connected to the first reinforcing rib 12 so as to further enhance the rigidity and strength of the left pre-positioning post 14.

Accordingly, with continued reference to FIG. 2 and on the basis of the orientation shown in FIG. 2, a right lap joint region 23 a right lap joint region 23 is formed on the right side of the right D pillar body 21 and extends substantially in the up-down direction (i.e., the X-direction of the vehicle in the assembled state). The right pre-positioning post 24 is formed in the right lap joint region 23, and the right pre-positioning post 24 is a columnar protrusion 611 extending from the right lap joint region 23 along the center line offset from the Z-direction of the vehicle by the predetermined acute angle α, i.e., extending obliquely toward the upper right. Preferably, the right pre-positioning post 24 is configured to be connected to the second reinforcing rib 22 so as to further enhance the rigidity and strength of the right pre-positioning post 24.

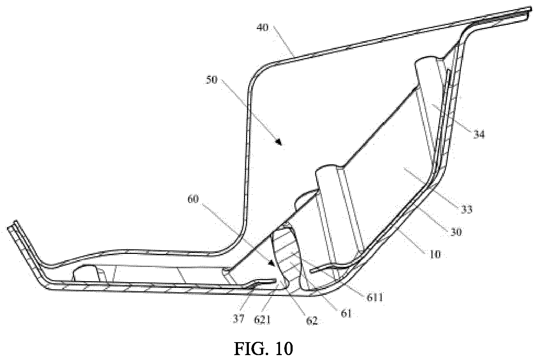

With continued reference to FIG. 3 and on the basis of the orientation shown in FIG. 3, a left lap joint edge 35 extending in the up-down direction (i.e., the X-direction of the vehicle in the assembled state) is provided on the left side of the lower cross beam 30. In one or more embodiments, in the assembled state, the left lap joint edge 35 intersects with the left pre-positioning post 14, and the left lap joint edge 35 is oblique upwardly (based on the orientation shown in FIG. 10) relative to the lower cross beam body 32, rather than perpendicular to the Z-direction of the vehicle (i.e., the up-down direction of the vehicle), and such a configuration allows the lower cross beam 30 to fall down onto the left D pillar 10 along the center line of the left pre-positioning post 14. A left pre-positioning hole 351 is formed in the middle of the left lap joint edge 35. As shown in FIG. 9, the left pre-positioning hole 351 is a U-shaped groove 621 with an opening facing away from the lower cross beam body 31 (i.e., toward the left side). In one or more embodiments, a rounded guide edge 6211 is formed at each of the edges of the U-shaped grooves 621 close to the lower cross beam body 31 such that the left pre-positioning post 14 can be easily inserted into the left pre-positioning hole 351. With continued reference to FIG. 7, in one or more embodiments, when the left pre-positioning post 14 is inserted into the left pre-positioning hole 351, a predetermined gap is reserved between the left pre-positioning post 14 and the left pre-positioning hole 351 such that the left pre-positioning post 14 is more easily inserted into the left pre-positioning hole 351. In one or more embodiments, a boss 37 extending perpendicularly upwardly from the left lap joint edge 35 is formed around the left pre-positioning hole 351, so that the lower cross beam 30 can be prevented from being released from the left D pillar 10 and the right D pillar 20 during translation, the rigidity and strength of the region of the left pre-positioning hole 351 can also be enhanced to prevent the region from deforming to shorten its service life.

Accordingly, with continued reference to FIG. 3 and on the basis of the orientation shown in FIG. 3, a left lap joint edge 36 extending in the up-down direction (i.e., the X-direction of the vehicle in the assembled state) is provided on the right side of the lower cross beam 30. In one or more embodiments, in the assembled state, the right lap joint edge 36 also intersects with the right pre-positioning post 24 and the right lap joint edge 36 is oblique upwardly relative to the lower cross beam body 32, rather than perpendicular to the Z-direction of the vehicle (i.e., the up-down direction of the vehicle), and such a configuration allows the lower cross beam 30 to fall down onto the right D pillar 20 along the center line of the right pre-positioning post 24. A right pre-positioning hole 361 is formed in the middle of the right lap joint edge 36. It should be noted that the right pre-positioning hole 361 may be arranged symmetrically with the left pre-positioning hole 351 along the central axis of the lower cross beam 30, which will not be described in detail herein.

With continued reference to FIGS. 1 and 2, in one or more embodiments, the rear roof cross beam mounting structure 1 for a vehicle of the disclosure further comprises an upper cross beam 40 located above the lower cross beam 30 and fixedly connected to each of the left D pillar 10, the lower cross beam 30, and the right D pillar 20. FIG. 4 is a schematic structural diagram of an embodiment of the upper cross beam of the rear roof cross beam mounting structure for a vehicle according to the disclosure. As shown in FIG. 4, in one or more embodiments, the upper cross beam 40 has a substantially plate-like upper cross beam body 41. The upper cross beam body 41 is a metal stamped part machined by means of mechanical stamping so as to reduce the machining cost. Preferably, the upper cross beam body 41 is an aluminum alloy stamped part, allowing it to have a light weight, good mechanical strength and low material cost. Alternatively, the upper cross beam body 41 may also be machined from other suitable metal materials, such as a magnesium alloy.

FIG. 5 is a schematic structural diagram of an embodiment of the rear roof cross beam mounting structure for a vehicle according to the disclosure, with the upper cross beam assembled to the lower cross beam; FIG. 6 is a cross-sectional view taken along line A-A shown in FIG. 5; FIG. 10 is a cross-sectional view taken along line B-B shown in FIG. 1. As shown in FIGS. 1, 5, 6, and 10, the upper cross beam 40 is arranged over fixedly connected to each of the left D pillar 10, the lower cross beam 30, and the right D pillar 20. Fixating means include, but are not limited to, resistance spot welding, self-piercing riveting, etc. The upper cross beam 40, the left D pillar 10, the lower cross beam 30 and the right D pillar 20 jointly enclose a reinforcement cavity 50 to further enhance the rigidity and strength of the entire rear roof cross beam mounting structure 1.

In the rear roof cross beam mounting structure 1 for a vehicle according to the disclosure, the left D pillar 10, the lower cross beam 30 and the right D pillar 20 are provided as metal castings, such that the rigidity and strength of components can be enhanced with arranged reinforcing ribs in a limited space, stress conduction can be enhanced, torsion caused by insufficient mechanical strength can be prevented, and NVH (i.e., Noise, vibration, harshness) properties can be optimized accordingly. The arrangement of the upper cross beam 40 makes it possible to form the reinforcement cavity 50 in the rear roof cross beam mounting structure 1 so as to further enhance the rigidity and strength. In addition, the upper cross beam 40 is provided as a metal stamped part, so that the machining cost can be reduced on the basis of achieving mechanical strength and NVH properties.

The disclosure further provides a vehicle (not shown in the figures). The vehicle comprises the rear roof cross beam mounting structure 1 for a vehicle described in any one of the above embodiments. In one or more embodiments, the vehicle is a pure electric vehicle. Alternatively, the vehicle may be a hybrid vehicle, a fuel vehicle, or another proper vehicle. The vehicle may be a car, an SUV, an MPV or other suitable vehicles. The vehicle further comprises components such as a vehicle body 2 (see FIG. 1), wheels, seats, a steering wheel. The vehicle body 2 comprises a left sheet metal 210 and a right sheet metal 220 that are symmetrical bilaterally. The rear roof cross beam mounting structure 1 is fixed between the left sheet metal 210 and the right sheet metal 220 so as to increase the rigidity and strength of the entire vehicle.

Heretofore, the technical solutions of the disclosure have been described with reference to the preferred embodiments shown in the accompanying drawings. However, those skilled in the art can readily understand that the scope of protection of the disclosure is apparently not limited to these specific embodiments. The invention is defined in the appended claims.

## Claims

1. A rear roof cross beam mounting structure for a vehicle, wherein the rear roof cross beam mounting structure comprises:
a left D pillar and a right D pillar, the left D pillar and the right D pillar each being fixed to a body of the vehicle;
a lower cross beam, the lower cross beam being arranged between the left D pillar and the right D pillar; and
a pre-positioning structure, the pre-positioning structure comprising pre-positioning posts and pre-positioning holes, the rear roof cross beam mounting structure being **characterized in that** the pre-positioning posts are columnar protrusions respectively extend upwardly from bodies of the left D pillar and the right D pillar along a center line offset from a Z-direction of the vehicle by a predetermined acute angle, the pre-positioning holes are U-shaped grooves respectively formed in a left side edge and a right side edge of the lower cross beam and having openings facing away from a body of the lower cross beam, and
the columnar protrusions are configured to be insertable into corresponding U-shaped grooves such that the lower cross beam is placed on each of the left D pillar and the right D pillar along the center line.

2. The rear roof cross beam mounting structure for a vehicle according to claim 1, wherein the left D pillar, the right D pillar, and the lower cross beam each are aluminum alloy castings.

3. The rear roof cross beam mounting structure for a vehicle according to claim 1 or 2, wherein a predetermined gap is reserved between the columnar protrusions and the corresponding U-shaped grooves.

4. The rear roof cross beam mounting structure for a vehicle according to any one of claims 1 to 3, wherein the predetermined acute angle is within a range of 5°-25°.

5. The rear roof cross beam mounting structure for a vehicle according to any one of claims 1 to 4, wherein the body of the lower cross beam has a thickness of 2.5 mm-3.5 mm.

6. The rear roof cross beam mounting structure for a vehicle according to any one of claims 1 to 5, wherein the rear roof cross beam mounting structure further comprises:
an upper cross beam, the upper cross beam being fixedly connected to each of the left D pillar, the lower cross beam and the right D pillar, and the upper cross beam, the left D pillar, the lower cross beam and the right D pillar jointly enclosing a reinforcement cavity.

7. The rear roof cross beam mounting structure for a vehicle according to claim 6, wherein the upper cross beam is an aluminum alloy stamped part.

8. The rear roof cross beam mounting structure for a vehicle according to claim 6 or 7, wherein a reinforcing rib located in the reinforcing cavity is provided on each of the left D pillar, the lower cross beam, and the right D pillar.

9. The rear roof cross beam mounting structure for a vehicle according to claim 8, wherein a plurality of transverse reinforcing ribs and a plurality of longitudinal reinforcing ribs spaced apart from each other are formed on the body of the lower cross beam, and a cylindrical protrusion is formed at each of junctions between the transverse reinforcing ribs and the longitudinal reinforcing ribs.

10. The rear roof cross beam mounting structure for a vehicle according to any one of claims 1 to 9, wherein the lower cross beam is fixedly connected to the left D pillar and the right D pillar by means of combining self-piercing riveting with a structural adhesive, or by means of combining welding with a structural adhesive.

11. A vehicle, comprising a rear roof cross beam mounting structure for a vehicle according to any one of claims 1-10.

## Patentansprüche

1. Heckdachquerträgermontagestruktur für ein Fahrzeug, wobei die Heckdachquerträgermontagestruktur Folgendes aufweist:
eine linke D-Säule und eine rechte D-Säule, wobei die linke D-Säule und die rechte D-Säule jeweils an einer Karosserie des Fahrzeugs befestigt sind;
einen unteren Querträger, wobei der untere Querträger zwischen der linken D-Säule und der rechten D-Säule angeordnet ist; und
eine Vorpositionierungsstruktur, wobei die Vorpositionierungsstruktur Vorpositionierungspfosten und Vorpositionierungslöcher aufweist, wobei die Heckdachquerträgermontagestruktur **dadurch gekennzeichnet ist, dass** die Vorpositionierungspfosten säulenförmige Vorsprünge sind, die sich jeweils von Körpern der linken D-Säule und der rechten D-Säule entlang einer Mittellinie nach oben erstrecken, die von einer Z-Richtung des Fahrzeugs um einen vorbestimmten spitzen Winkel versetzt ist, wobei die Vorpositionierungslöcher U-förmige Nuten sind, die jeweils in einer linken Seitenkante und einer rechten Seitenkante des unteren Querträgers ausgebildet sind und Öffnungen aufweisen, die von einem Körper des unteren Querträgers weg weisen, und
die säulenförmigen Vorsprünge so ausgelegt sind, dass sie in entsprechende U-förmige Nuten so einsetzbar sind, dass der untere Querträger jeweils auf der linken D-Säule und der rechten D-Säule entlang der Mittellinie angeordnet ist.

2. Heckdachquerträgermontagestruktur für ein Fahrzeug gemäß Anspruch 1, wobei die linke D-Säule, die rechte D-Säule und der untere Querträger jeweils Gussteile aus einer Aluminiumlegierung sind.

3. Heckdachquerträgermontagestruktur für ein Fahrzeug nach Anspruch 1 oder 2, wobei ein vorbestimmter Spalt zwischen den säulenförmigen Vorsprüngen und den entsprechenden U-förmigen Nuten vorgesehen ist.

4. Heckdachquerträgermontagestruktur für ein Fahrzeug nach einem der Ansprüche 1 bis 3, wobei der vorbestimmte spitze Winkel innerhalb eines Bereichs von 5°-25° liegt.

5. Heckdachquerträgermontagestruktur für ein Fahrzeug nach einem der Ansprüche 1 bis 4, wobei der Körper des unteren Querträgers eine Dicke von 2,5 mm bis 3,5 mm aufweist.

6. Heckdachquerträgermontagestruktur für ein Fahrzeug nach einem der Ansprüche 1 bis 5, wobei die Heckdachquerträgermontagestruktur ferner Folgendes aufweist:
einen oberen Querträger, wobei der obere Querträger jeweils fest mit der linken D-Säule, dem unteren Querträger und der rechten D-Säule verbunden ist und der obere Querträger, die linke D-Säule, der untere Querträger und die rechte D-Säule gemeinsam einen Verstärkungshohlraum umschließen.

7. Heckdachquerträgermontagestruktur für ein Fahrzeug nach Anspruch 6, wobei der obere Querträger ein Stanzteil aus einer Aluminiumlegierung ist.

8. Heckdachquerträgermontagestruktur für ein Fahrzeug nach Anspruch 6 oder 7, wobei an der linken D-Säule, dem unteren Querträger und der rechten D-Säule jeweils eine im Verstärkungshohlraum angeordnete Verstärkungsrippe vorgesehen ist.

9. Heckdachquerträgermontagestruktur für ein Fahrzeug nach Anspruch 8, wobei eine Vielzahl von quer verlaufenden Verstärkungsrippen und eine Vielzahl von längs verlaufenden Verstärkungsrippen, die voneinander beabstandet sind, auf dem Körper des unteren Querträgers ausgebildet sind, und ein zylindrischer Vorsprung an jeder der Verbindungen zwischen den quer verlaufenden Verstärkungsrippen und den längs verlaufenden Verstärkungsrippen ausgebildet ist.

10. Heckdachquerträgermontagestruktur für ein Fahrzeug nach einem der Ansprüche 1 bis 9, wobei der untere Querträger fest mit der linken D-Säule und der rechten D-Säule durch eine Kombination von Stanznieten mit einem Strukturkleber oder durch eine Kombination von Schweißen mit einem Strukturkleber verbunden ist.

11. Fahrzeug, aufweisend eine Heckdachquerträgermontagestruktur für ein Fahrzeug nach einem der Ansprüche 1-10.

## Revendications

1. Structure de montage de traverse de toit arrière pour un véhicule, dans laquelle la structure de montage de traverse de toit arrière comprend :
un pilier D gauche et un pilier D droit, le pilier D gauche et le pilier D droit étant chacun fixés à une carrosserie du véhicule ;
une traverse inférieure, la traverse inférieure étant agencée entre le pilier D gauche et le pilier D droit ; et
une structure de pré-positionnement, la structure de pré-positionnement comprenant des montants de pré-positionnement et des trous de pré-positionnement, la structure de montage de traverse de toit arrière étant **caractérisée en ce que** les montants de pré-positionnement sont des saillies en colonne s'étendant respectivement vers le haut depuis des corps du pilier D gauche et du pilier D droit le long d'un axe central décalé par rapport à une direction Z du véhicule selon un angle aigu prédéterminé, les trous de pré-positionnement sont des rainures en forme de U respectivement formées dans un bord latéral gauche et un bord latéral droit de la traverse inférieure et ayant des ouvertures tournées à l'opposé d'un corps de la traverse inférieure, et
les saillies en colonne sont configurées pour être insérables dans des rainures en forme de U correspondantes de telle sorte que la traverse inférieure soit placée sur chacun du pilier D gauche et du pilier D droit le long de l'axe central.

2. Structure de montage de traverse de toit arrière pour un véhicule selon la revendication 1, dans laquelle le pilier D gauche, le pilier D droit, et la traverse inférieure sont chacun des pièces coulées en alliage d'aluminium.

3. Structure de montage de traverse de toit arrière pour un véhicule selon la revendication 1 ou 2, dans laquelle un espace prédéterminé est réservé entre les saillies en colonne et les rainures en forme de U correspondantes.

4. Structure de montage de traverse de toit arrière pour un véhicule selon l'une quelconque des revendications 1 à 3, dans laquelle l'angle aigu prédéterminé est au sein d'une plage de 5 ° à 25 °.

5. Structure de montage de traverse de toit arrière pour un véhicule selon l'une quelconque des revendications 1 à 4, dans laquelle le corps de la traverse inférieure a une épaisseur de 2,5 mm à 3,5 mm.

6. Structure de montage de traverse de toit arrière pour un véhicule selon l'une quelconque des revendications 1 à 5, dans laquelle la structure de montage de traverse de toit arrière comprend en outre :
une traverse supérieure, la traverse supérieure étant reliée de façon fixe à chacun du pilier D gauche, de la traverse inférieure et du pilier D droit, et la traverse supérieure, le pilier D gauche, la traverse inférieure et le pilier D droit entourent conjointement une cavité de renfort.

7. Structure de montage de traverse de toit arrière pour un véhicule selon la revendication 6, dans laquelle la traverse supérieure est une pièce estampée en alliage d'aluminium.

8. Structure de montage de traverse de toit arrière pour un véhicule selon la revendication 6 ou 7, dans laquelle une nervure de renfort située dans la cavité de renfort est prévue sur chacun du pilier D gauche, de la traverse inférieure, et du pilier D droit.

9. Structure de montage de traverse de toit arrière pour un véhicule selon la revendication 8, dans laquelle une pluralité de nervures de renfort transversales et une pluralité de nervures de renfort longitudinales espacées les unes des autres sont formées sur le corps de la traverse inférieure, et une saillie cylindrique est formée à chacune de jonctions entre les nervures de renfort transversales et les nervures de renfort longitudinales.

10. Structure de montage de traverse de toit arrière pour un véhicule selon l'une quelconque des revendications 1 à 9, dans laquelle la traverse inférieure est reliée de façon fixe au pilier D gauche et au pilier D droit au moyen de combinaison de rivetage auto-perçant avec un adhésif structural, ou au moyen de combinaison de soudage avec un adhésif structural.

11. Véhicule, comprenant une structure de montage de traverse de toit arrière pour un véhicule selon l'une quelconque des revendications 1 à 10.
